(19) **Europäisches Patentamt European Patent Office Office européen des brevets**

(11) **EP 4 738 760 A1**

(12) **EUROPEAN PATENT APPLICATION**

(43) Date of publication:
06.05.2026 Bulletin 2026/19

(21) Application number: 24210675.5

(22) Date of filing: 04.11.2024

(51) International Patent Classification (IPC):
**H04L 9/08** (2006.01)

(52) Cooperative Patent Classification (CPC):
**H04L 9/0825; H04L 9/0861**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: NXP B.V.
**5656 AG Eindhoven (NL)**

(72) Inventors:
• **FOLWARCZNY, Artur**
**8020 Graz (AT)**
• **SCHNEIDER, Tobias**
**8010 Graz (AT)**
• **BRONCHAIN, Olivier**
**1160 Auderghem (BE)**

(74) Representative: **Hardingham, Christopher Mark**
**NXP Semiconductors**
**Intellectual Property Group**
**High Tech Campus 60**
**5656 AG Eindhoven (NL)**

(54) **LOW MEMORY KEY GENERATION FOR CLASSIC MCELIECE CRYPTOSYSTEM**

(57) A method is proposed to make more efficient use of limited computing resources in embedded computing devices.

S100 – a request is received for generation of public key

S102 – request provided to key generation module.

S104 – random seed of matrix $H'$ is generated and matrix $H'$ is provided as an implicit input.

S106 – counter $r$ initialised to zero

S108 – matrix ($S \in F_2^{mt \times mt}$) implicitly initialised.

S110 – column $r$ swapped with column $mt-1$

S112 – last row of $T$ is calculated based on row calculation routine output

S114 – row $r$ of $T_{mt-1}H' = H_r$ calculated. $PubK_r$ is equal to elements $mt$ to $n-1$ of $H_r$.

Fig. 1

## Description

### FIELD

The invention relates to a method and system. Particularly, but not exclusively, the invention relates to a computer-implemented method for generating a cryptographic key.

### BACKGROUND

Classic McEliece cryptosystems is a post-quantum key encapsulation mechanism (KEM) which is based on codes. This cryptosystem is often discussed as being suitable for resisting attacks from Quantum Computers.

It is becoming an increasing requirement for devices with limited access to RAM to need to generate their own public or private keys. The computing requirements of the key generation often conflict with the limited access to RAM.

Aspects and embodiments were conceived with the foregoing in mind.

### SUMMARY

Aspects relate to generating a cryptographic key. The cryptographic key may be generated in accordance with a McEliece cryptographic key generation approach. Aspects may be combined with a key encapsulation mechanism (KEM).

Viewed from a first aspect, there may be provided a computer-implemented method of generating a public key. The public key may be generated in accordance with the Classic McEliece cryptosystem. The public key may comprise a matrix of a plurality of rows and columns. The number of rows and columns may be determined based on the security properties of the cryptosystem. The method may be implemented by a processing resource. The processing resource may be a secure computing resource such as, for example, a trusted execution environment. The processing resource may be hosted within a computing device. The processing resource may be located within an embedded computing device.

The method may comprise receiving a request for a public key. The request may be received from a host computing resource which is hosting the processing resource. The request may be responsive to a request from a user.

The method may, responsive to receiving the request, generate a first key generation matrix. The generation of the elements of the first key generation matrix may be done 'ad hoc', that is, independently of other elements in the matrix and without interrupting the rest of the method. The elements may be generated based on a random or pseudorandom seed. That is to say, the first key generation matrix may be generated in a first stage of the key generation process and the second key generation matrix may be generated in a second stage.

The method may generate a second key generation matrix based on the first key generation matrix in that the elements of the first key generation matrix are used in the generation of the second key generation matrix. This may mean the elements of the first key generation matrix form a part of the second generation matrix or, alternatively or optionally or additionally, that elements of the first key generation matrix are processed to generate the second key generation matrix. This may comprise setting the second key generation matrix equal to a part of the first key generation matrix where a part may be understood not to mean the full first key generation matrix. This may additionally or alternatively or optionally comprise setting a part of the second key generation matrix equal to the first key generation matrix. The second key generation matrix may comprise, in part, an identity matrix. The method may comprise generating part of an inverse of the second key generation matrix, wherein part of the inverse of the second key generation matrix is not equal to the full inverse of the second key generation matrix. The part of the inverse may comprise one or more rows or columns of the inverse of the second key generation matrix. The method may further comprise, where the second key generation matrix is non-invertible, applying a process to make the second key generation matrix invertible.

The method may comprise generating a part of the public key based on a part of the inverse of the second key generation matrix and the first key generation matrix. The public key may be dependent on at least one of one or more rows of the inverse of the second key generation matrix and/or one or more rows of the first key generation matrix. The part of the public key may comprise one or more rows of the matrix used to define the public key.

A method in accordance with the first aspect enables a key to be generated using fewer memory resources on the processing resource. This enables keys to be generated on devices with lower memory resources (for example an embedded computing device which has low amounts of RAM).

Optionally, the inverse of the second key generation matrix is not stored, in that a part of the matrix which is less than the full matrix (and not the full matrix) is stored and the full matrix is not stored.

Optionally, the part of the inverse of the second key generation matrix is stored in random access memory.

Optionally, the generation of the part of the inverse of the second key generation matrix may be repeated until all of the parts of the second key generation matrix have been used to generate a corresponding part of the public key. That is to say, the generated part of the inverse is used to generate the corresponding part of the public key. In other words, say, a first generated part of the inverse corresponds to a first part of the public key and a second generated part of the inverse (which is distinct from the first part of the inverse) corresponds to a second part of the public key (which is distinct from the first part of the public key). The generation of the part of the inverse may then be repeated until the full public key has been generated.

Optionally, the part of the inverse of the second key generation matrix is a row of the inverse of the second key generation matrix. The part of the public key based on the part of the second key generation matrix may be a row of the public key.

Optionally, the part of the inverse of the second key generation matrix may be a plurality of rows of the inverse of the second key generation matrix and the part of the public key based on the part of the second key generation matrix is a plurality of rows of the public key.

Optionally, the first key generation matrix may be generated without interrupting the method. Optionally, the elements of the first key generation matrix may be generated based on a random or pseudo-random seed.

Optionally, the part of the public key may be generated based on a product of a part of the inverse of the second key generation matrix and the first key generation matrix.

Optionally, the processing resource may be an embedded computing device. That is, the processing resource may be a computer which performs a specific task within a larger machine. An embedded computing device may have access to memory but it may be limited.

Optionally, the request for the public key may be received from a host computing device which hosts the embedded computing device. Optionally, the request for a public key can be received from any computing device which can communicate, directly (i.e. through direct connection) or indirect connection (i.e. where the request is processed by various other message processing or routing entities) with the embedded computing device. Optionally, the request for a public key may be received from another embedded computing device which is in communication with the embedded computing device. The host computing device may be a computing device which communicates with the embedded computing device using any suitable telecommunications medium.

Optionally, the second key generation matrix is equal to elements in the first $mt$ rows and first $mt$ columns of the first key generation matrix. The quantity $mt$ is a product of the factors $m$ and $t$, where:

$$m = \log_2 q;$$

where $t$ is a parameter that influences the security properties of the McEliece cryptosystem; and

where $q$ is the size of the finite field.

Optionally, wherein generating part of an inverse of the second key generation matrix comprises (wherein all elements of $S$ and $T$ are in

$$F_2^{\square}$$

and wherein all elements of $D$ are integers) one or more of the following steps:

a) Initialising a permutation vector D of $mt$ elements to the integers 0, 1, 2 ... $mt-1$

b) Initialising the matrix $T \in F_2^{mt \times mt}$ to the identity matrix;

c) Loop 1: iteratively, for $c=0$ up to $mt-1$:

d) Generating the elements c to $mt-1$ of column c of the second key generation matrix S $\in F_2^{mt \times mt}$ and storing them as elements $c$ to $mt-1$ of the vector $S_c \in F_2^{mt}$;

e) Setting the elements 0 to $c-1$ of the vector $S_c$ to 0;

f) Applying the permutation stored in $D$ to the elements of $S_c$

g) Multiplying $TS_c = S_c'$.

h) If element $c$ of $S'_c \neq 1$

i) Finding the next element $j$ in $S'_c$ which is 1

j) Swapping element c and element $j$ of $S'_c$

k) Swapping element c and element $j$ of $D$

l) Swapping row $c$ and row $j$ of $T$

m) Swapping column $c$ and column $j$ of $T$
End if

n) Loop 2: For $d = c+1$ up to $mt-1$

o) If element $d$ of $S'_c == 1$

p) Computing the bitwise XOR of row $d$ of $T$ and row $c$ of $T$ and storing the result in row $d$ of $T$
End if
End loop 2

q) Discarding row $c$ of $T$
End loop 1

r) Inverting the permutation vector $D$ as $D^{-1}$

s) Applying the inverted permutation $D^{-1}$ to columns of $T$

Optionally, the part of the public key may be provided to a requesting entity.
Optionally, the generation of parts of the public key may be repeated until the full public key is provided.
Optionally, the first key generation matrix and the second key generation matrix may comprise elements of a finite field of order 2.
Non-transitory computer readable storage media, systems and processing resources may also be provided which are configured to provide a method in accordance with the first aspect.

## DESCRIPTION

An embodiment will now be described by way of example only and with reference to the following drawings in which:

Figure 1 illustrates a process of generating a cryptographic key in accordance with the embodiment;

Figure 2 illustrates a processing resource which is configured to generate a key in accordance with the embodiment;

Figure 3 illustrates a process of generating a part of an inverse of a matrix;

Figure 4 illustrates schematically how memory is allocated during inversion in the minimal case;

Figure 5 illustrates the first application of column swaps to reduce memory footprint during Gaussian elimination on a matrix;

Figure 6 illustrates the second application of column swaps to force the generation of desired rows of the matrix inverse;

Figure 7 illustrates schematically how memory is allocated during inversion in the maximal case;

Figure 8 illustrates how the desired number of rows to be generated influences the memory requirements; and

Figure 9 illustrates a hardware implementation in accordance with the embodiment.

For the purposes of clarity and completeness, we now describe the classical approach to Classic McEliece key generation in order to assist in illustrating the main benefits of the embodiment. In this cryptosystem the public key is the systematized form of the parity check matrix for a Goppa code. The most memory intensive operation is the computation of the systematized form of the parity-check matrix, the result of which is the public key.

The public key generation is described in Algorithm 1. Note that throughout this document we use the same convention for parameters as in the Classic McEliece specification namely for: *m, t, mt, n* and *q*. Furthermore, we assume that element 0 is the first element of a vector and row 0 and column 0 are, respectively, the first row and first column of a matrix.

<u>Algorithm 1</u>:

Input: Private Key consisting of $g$, a monic irreducible polynomial in $F_q[x]$ of degree $t$ and $\alpha_0, \alpha_1, \dots$

, $\alpha_{n-1}$, distinct elements in $F_q$

Output: *PubK*, a $mt \times (n - mt)$ matrix with elements in $F_2$

1. Compute the $t \times n$ matrix $\overline{H} = \{h_{i,j}\}$ over $F_q$, where $h_{i,j} = \dfrac{\alpha_j^{i-1}}{g(\alpha_j)}$ for $i = 0, \dots, t-1$ and j = $0, \dots, n-1$
2. Form an $mt \times n$ matrix $H'$ over $F_2$ by replacing each entry $u_0 + u_1 z + \cdots + u_{m-1} z^{m-1}$ of $H'$ with a column of $m$ bits $u_0, u_1, \dots, u_{m-1}$
3. Reduce $H'$ to systematic form [ $I$ | *PubK* ] where $I$ is an $mt \times mt$ identity matrix. If this fails, return ⊥.
4. Return *PubK*.

PubK is a public key which is generated in accordance with a McEliece cryptosystem.

Generally speaking, Classic McEliece is a post-quantum Key Encapsulation Mechanism (KEM) based on codes. However, it is difficult to deploy key generation based on the McEliece approach on embedded computing devices due to their limited RAM. Specifically, one major roadblock is that the Classic McEliece cryptosystem has public keys with sizes between 261kB and 1358kB dependent on parameter sets. Carrying out operations with such high memory usage is difficult for such memory-constrained embedded devices, which may have a maximum RAM capacity of less than 100kB.

There are two main standards methods to implement the Key Generation operation. The first one stores a large matrix of between 335kB and 1704kB (dependent on parameter set) completely in RAM and systematizes it to derive the whole public key at once. Due to the matrix size this approach is not suited for embedded devices. The second approach instead stores only part of the matrix in RAM (74kB to 346kB), inverts it, and then uses this inverse to generate the public key column wise (which then can be streamed out). While this approach noticeable reduces the peak RAM capacity from 335kBto 74kB, it is still impractical for most embedded devices, especially for larger parameter sets.

One approach which does seek to address the key generation memory problems is set out in Algorithm 2 below.

Algorithm 2:

Input: Elements of matrix $H'$

Output: *PubK*, a $mt \times (n - mt)$ matrix with elements in $F_2$, generated by column

1. Form the square matrix $S \in F_2^{mt \times mt}$ by taking the first *mt* columns of $H'$.
2. Invert $S$ to obtain $S^{-1}$
3. For *c = mt* up to *n-1*
   3.1. Compute $S^{-1}H'_c$ = PubK$_c$ where H'$_c \in F_2^{mt}$ is a column of $H'$ and PubK$_c \in F_2^{mt}$ is a column of the systematized result *PubK*.

Algorithm 2 determines the columns of the Public Key using the computed inverse of matrix *S*. This approach requires the generation and storage of the full inverse of *S*, which still consumes considerable amounts of RAM, making it unsuitable for deployment on computing devices with low amounts of available RAM.

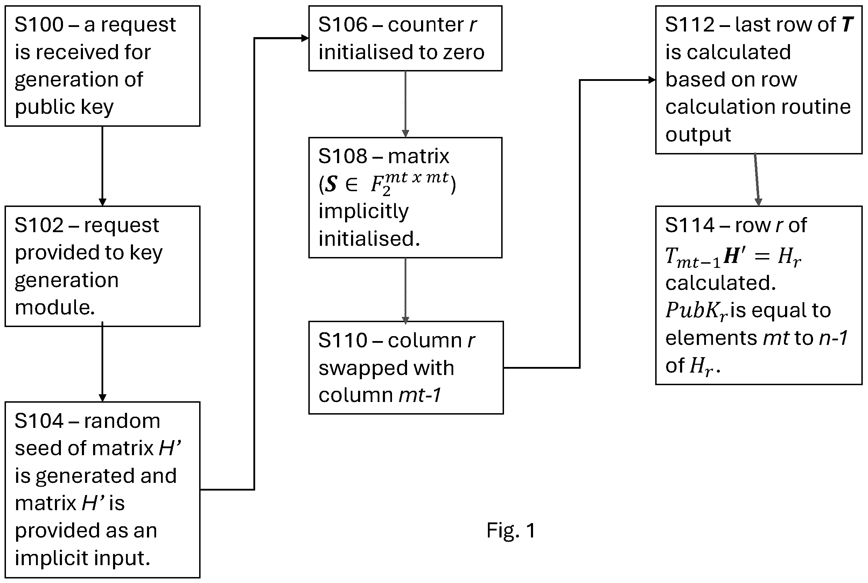

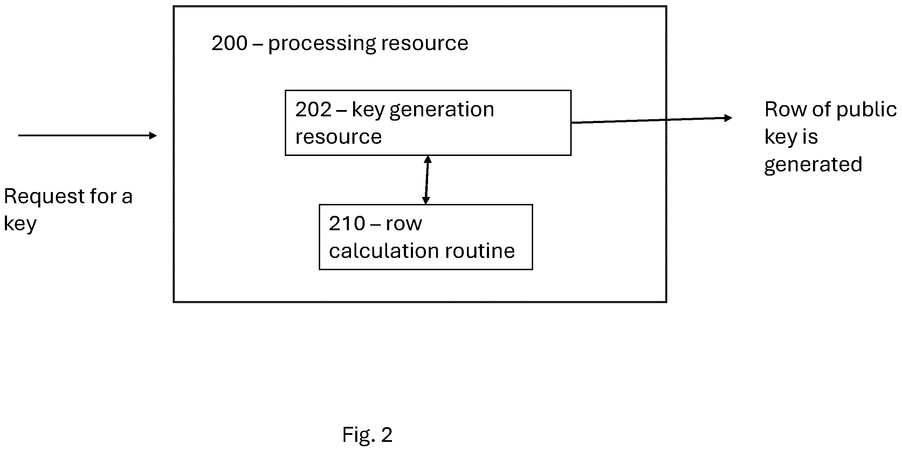

We now describe a more memory efficient key generation approach in accordance with the embodiment with reference to Figure 1 and the processing resource 200 illustrated in Figure 2. We illustrate key generation with reference to the example of the Classic McEliece cryptosystem.

In a step S100, a request is received at processing resource 200 for the generation of a public key in accordance with the Classic McEliece cryptosystem. The request may be received from a user of a computing device which hosts the processing resource or any other computing device of any type. The processing resource 200 may be an embedded computing device. The embedded computing device may have access to a limited amount of random access memory (RAM) which necessitates a more efficient method of key generation using the embedded computing device.

The request in step S100 is provided to a key generation module 202 in a step S102.

The key generation module 202 is configured to generate a matrix *H'*. *H'* is computed based on the private key, which consists of two parts: g, a monic irreducible polynomial in $F_q[x]$ of degree t and a support $\alpha_0, \alpha_1, ..., \alpha_{n-1}$, consisting of distinct elements in $F_q$. The polynomial and support are generated based on a random seed. The private key is first used to construct a t by n matrix $\overline{H}$ with elements in $F_q$, where each element can be computed as the product of a specific power of a specific $\alpha_i$ and the inverse of the polynomial g evaluated at that $\alpha_i$. That is to say, elements of $\overline{H}$ can be generated independently, without relying on other elements. $\overline{H}$ is transformed into the matrix *H'* by expanding the numbers of rows to *mt* and changing the field to $F_2$. Now sub-vectors of H' of size m can be generated independently. In the rest of this we will refer to the matrix H' as being generated ad hoc. This refers to the fact that elements of H' can be generated in sets of m elements. The generation relies only on the private key (without a dependence on any other set of m elements) and is computationally inexpensive. Therefore H' does not need to be stored, since its elements may be generated ad hoc.

This is step S104. However, alternatively or additionally, the matrix H' or any sub-matrix or element of *H'* may be stored in storage and retrieved to perform step S104. The storage may be local to the processing resource 200. In addition or alternatively, the matrix H' or any sub-matrix or element of H' can be stored or computed externally to the device and then sent to the device in full or part.

An iterative process is then initialised with a counter *r* which is initialised to zero. This is step S106. A matrix $S \in F_2^{mt \times mt}$ is then implicitly initialised and set to the first *mt* columns of H', where the set $F_2^{mt \times mt}$ is the set of square matrices with *mt* columns and *mt* rows with elements in $F_2^{\square}$. This is step S108. By implicitly initialise, we mean that the matrix is set to the values of *H'*, even if those values may not be currently stored or available yet.

In a step S110, the column *r* of matrix *S* is swapped with the column *mt-1* of matrix *S*. This can be achieved implicitly by swapping the indices used for memory or generation requests.

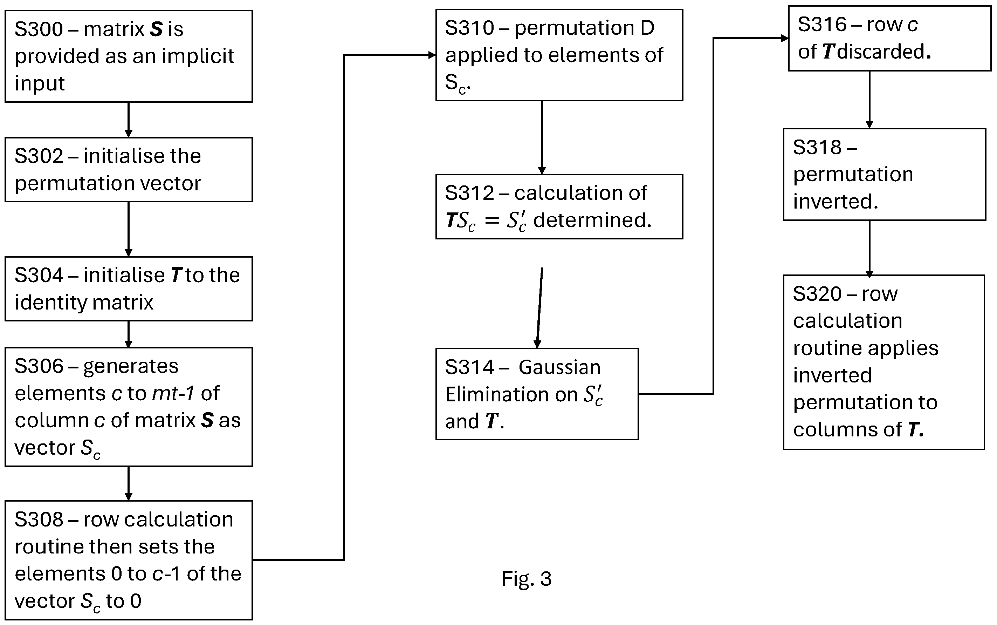

A row calculation routine 210 is then accessed by the key generation module 202 and steps S300 to S320 as well as S114, are performed to obtain the row *r* of the public key. We now describe this with reference to Figure 3. Matrix *S* (including the swapped columns) is used as an input to the row calculation routine 210 in a step S300. However, the matrix *S* need not be provided in full at the start of the row calculation routine 210. Since the Matrix *S* is implicitly initialized to the matrix *H'*, it's elements can be generated independently as needed (ad-hoc) during the row calculation routine 210. The Matrix S provided in this stage is assumed to have its columns implicitly swapped based on S110.

In a step S302, the row calculation routine 210 initialises the permutation vector *D* of *mt* integers to *D*= (0,1,2...*mt*-1). In a step S304, initialize $T \in F_2^{mt \times mt}$ to the identity matrix $I \in F_2^{mt \times mt}{}_{\square}$. *T* is used to store parts of the inverse of S and intermediate computations.

Then, for *c=0* up to *mt-1*:

The row calculation routine 210 generates the elements c to *mt-1* of column c of matrix *S* and stores them as the elements *c* to *mt-1* of the vector $S_c \in F_2^{mt}$ This is step S306. The row calculation routine then sets the elements 0 to *c-1* of the vector $S_c$ to 0. This is step S308.

In a step S310, the row calculation routine 210 applies the permutation stored in *D* to the elements of $S_c$. Applying the permutation stored in *D* implies adapting the order of the $F_2^{\square}$ elements of $S_c$ according to the indices stored in *D*. In a step S312, the row calculation routine performs the calculation $TS_c = S_c'$. The first c elements of vector $S_c'$ will be equal to zero.

The row calculation routine 210 then executes one iteration of Gaussian Elimination on $S_c'$ and *T*. Gaussian elimination works column-by-column, where for each column a pivot element is used to set all other elements of that column to zero by elementary row operations. One iteration of Gaussian elimination here refers to using one pivot element to 'zero' one column. This is step S314. The Gaussian elimination is modified relative to the standard approach and comprises the following steps:

If element c of $S_c' \neq 1$:

Find the next element j in vector $S'_c$ which is equal to 1.

Swap element c and element j of $S'_c$

Swap element c and element j of *D*

Swap row c and row j of *T*

Swap column c and column j of *T*

For d = c+1 up to mt-1, i.e. m multiplied by t
If element d of *S'c* == 1
Compute the bitwise XOR of row d of T and row c of T and store the result in row d of *T*

In a step S316, the row calculation routine 210 discards (i.e. sets to zero and therefore generates no memory overhead) row c of *T*. The output of step S316 is a modified version of both *T* and $S'_c$.

Steps S306 to S316 are repeated for *c* = 0 up to *mt-1*.

In a step S318, the row calculation routine 210 inverts the permutation stored in the vector *D*.

Inversion of a permutation refers to assigning indices to each element of the permutation vector and then sorting the original vector. The indices will be swapped around. The vector containing the swapped indices is the inverse permutation. In a step S320, the row calculation routine 210 applies the inverted permutation to columns of *T*.

Steps S300 to S320 produces the matrix *T* and return it to the key generation module 202. The last row of *T* (which is equal to the row *r* of S$^{-1}$) can then be extracted.

Steps S300 to S320 describe an approach to inverting a matrix in parts, which has lower memory requirements than inverting a matrix in full. The result of step S300 to S320 is the last row of the inverse of the matrix to be inverted. In previous approaches, it is necessary to store the complete inverted matrix S in memory. This still necessitates a typical memory requirement of 74kB (in the example of mceliece348864). The approach described in steps S300 to S320 uses reduced memory of 18kB. In summary, the method only computes the bottom row(s) of the inverse at a time and use this to generate parts of the public key as row chunks. That is, the method computes one or more bottom rows of the inverse at a time and use this to generate corresponding parts of the public key as chunks which are one or more rows.

Our low-memory inversion approach described above assumes that we are given a matrix *S*, for which we can generate each element ad hoc. In the Classic McEliece approach this is achieved via evaluating a polynomial at specific points, as described above. Furthermore, the initial goal is to compute the last row of the inverse of this matrix while minimizing the peak RAM capacity.

It should be clarified that the approach detailed in steps S300 to S320, we assume:

1. Whenever a column of a matrix has a one on the diagonal of that matrix and zeroes for all the other elements, that column has no memory overhead.
2. Whenever a row of a matrix is set to all zeroes, that row is "discarded" and has no memory overhead.
3. The first application of column swaps (column swaps in step S314) happens implicitly and has no computational overhead. That is, the column swaps are recorded in a permutation vector, however, the swaps have no direct effect on *T*, since the columns they apply to contain no relevant data (except for 1s on the diagonal) at the time of the swap.

Therefore, even though *T* is a matrix with *mt* rows and *mt* columns, at no point are all elements of the matrix *T* in use and it's memory usage is not *mt\*mt* bits. As will be shown later, the peak memory usage of the matrix *T* is either *mt\*(mt/2)* bits or *mt/2\*(mt/2)* bits dependent on performance requirements.

In a step S112, the last row of *T* is stored, i.e. the entirety of *T* is not to be stored.

In a step S114, the key generation module 202 performs the calculation $T^{\square}_{mt-1}H' = H_r$ where $H_r \in F_2^n$ is the row r of the systematized parity check matrix $H \in F_2^{mt \, x \, n}$ and $T^{\square}_{mt-1}$ is the last row of *T*. Taking elements *mt* to *n*-1 of *H* yields the public key $PubK \in F_2^{mt \, x \, (n-mt)}$. Therefore, the last row of the Public Key $PubK_r \in F_2^{n-mt}$ can be extracted from $H_r$. The last row of *T* is always used in the multiplication that generates the public key, because the swaps in step S110 always force the last row of the matrix *T* to be equal to the row r of the inverse of *S*. Steps S108 to S114 are repeated until the counter reaches the value *mt-1* and this enables the rows of the matrix H$_r$ to be generated individually. That is to say, the *mt* rows of *T* are generated individually and this is without storing the full matrix *T*.

The respective rows of the public key can then be provided to the requesting entity row by row. That is to say, the public key is provided row by row and not as an entire public key. This means that $T$ does not need to be stored as a whole matrix and is only used to generate the public key row by row.

The steps set out above can be modified to enable multiple rows to be generated simultaneously and then provided to the requesting entity as a group of rows. The way to achieve this is a modification of S316. We assume $k$ is the desired number of rows of the inverse we want to generate as part of one invocation of the row calculation routine 210. Once $c=mt-k,$ that is, once there are $k$ iterations remaining to compute, S316 no longer takes place. In other words, once the number of columns remaining to process is the same as the number desired rows of the inverse, we no longer discard rows of $T$.

The components of the public key, i.e. the individual rows or groups of rows, can be streamed to the requesting entity until the complete number of rows, i.e. $mt$ rows, have been provided. When the complete number of rows have been provided, the public key has been provided.

This means that an embedded computing device, which may have limited RAM, can be used to generate a public key.

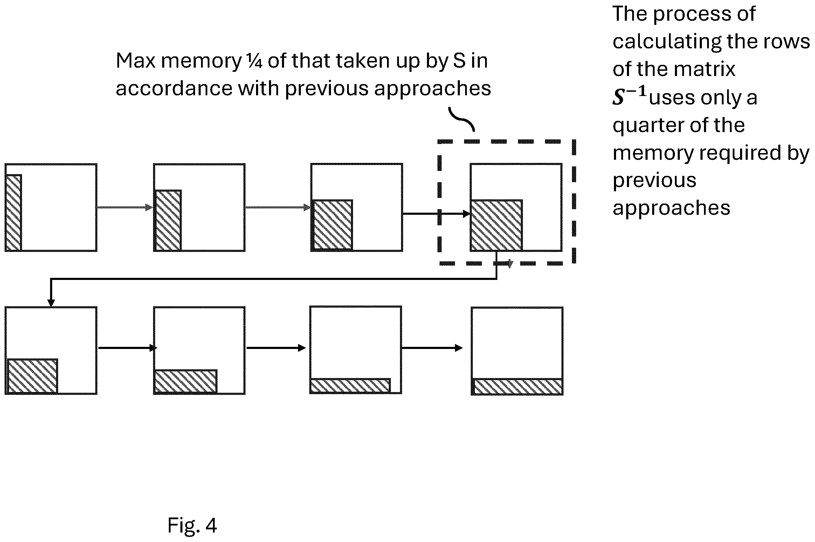

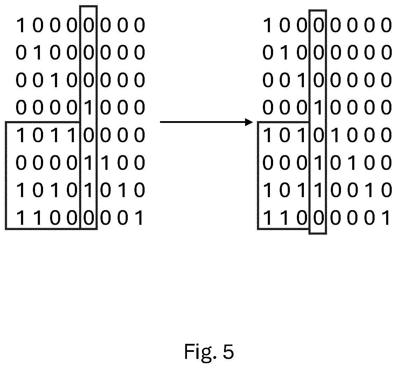

First, we process the matrix S column by column, which minimizes the peak memory for this part. The vector $S_c$, which was introduced above, is iteratively set to the relevant sub-vectors of columns of S as they are processed. However, this means we have to replay the steps of the previous iterations for the later columns (this is achieved by steps S310 and S312). In addition, we do not store the complete matrix T but only the parts of that matrix. In a standard implementation, it would be initialized with an identity matrix of size $mt$ by $mt$, which is then transformed in full during the algorithm. On the contrary, we only store the parts of the inverse intermediates that are strictly necessary for the computation of the bottom row of matrix T . We observe that this indeed helps to significantly reduce the peak memory requirements, as illustrated schematically in Figure 4 which shows how the memory usage evolves during the computation of the last row of matrix $T$. In an example, the minimum peak memory is 18kB (assuming mceliece348864), which is a 4x factor reduction to the best prior art approaches. Our modified approach to Gaussian elimination also reduces the storage requirements associated with calculation of the rows of matrix $T$. That is, instead of only swapping the rows, we also swap the columns of the same indices. In this way, the 1 above the diagonal is moved back to the diagonal, which helps to minimize the part of the inverse that needs to be kept in memory. This is shown on the right-hand side of Figure 5. However, to ensure correctness it is necessary to record this column swap, and apply it to each following column, that is processed. We store these swaps in a permutation vector of $mt$ elements (with each element, for example, having at most 11 bits dependent on parameter set), which adds a negligible increase to peak memory. We also need to apply the inverse of the permutation vector to the resulting row of the inverse, as the shown in step S320.

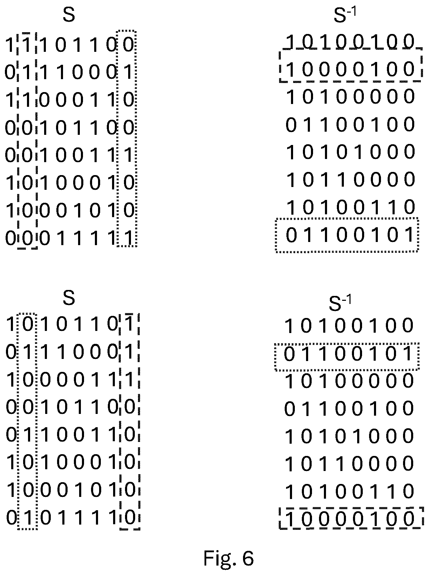

Third, with the procedure described in steps S100 to S114 it is possible to generate the last row of the inverse, which can be used to generate the last row of the public key as shown above. To generate the other rows of the public key, it is necessary to compute the remaining rows of the inverse one by one. We achieve this by repeating the low-memory inversion approach above, but we shuffle the columns of the original matrix beforehand. This occurs in step S110. For example, by swapping the last two columns of the original matrix S to a modified matrix $S'$, the algorithm above will compute the second to last row of the inverse $S^{-1}$ as the last row of the matrix $T$. By repeating this swap with other columns, we can iteratively generate all rows of $S^{-1}$ in a low memory fashion. Note that we do not store the original matrix S at any time, and instead generate it in an ad-hoc fashion column-wise, since, as previously mentioned, $H'$ can be generated ad hoc and S is a sub-matrix of $H'$. So the swap is not done explicitly on the matrix, but rather just by swapping generation indices. An example of this principle is provided in Figure 6. In other words, computation of the full inverse requires $mt$ iterations of the outer loop, i.e. steps S300 to S320, which means we have to generate S $mt$ times during the complete algorithm.

The above example looks at the simple example of the generation of one row at a time. It is also possible to implement the embodiment by generating multiple rows. That is to say, the key generation module 202 generates k rows of the inverse at a time, uses them to generate k rows of the public key, provides them to the requesting entity and then repeat the process with the next k rows of the inverse until the complete public key has been computed and streamed out.

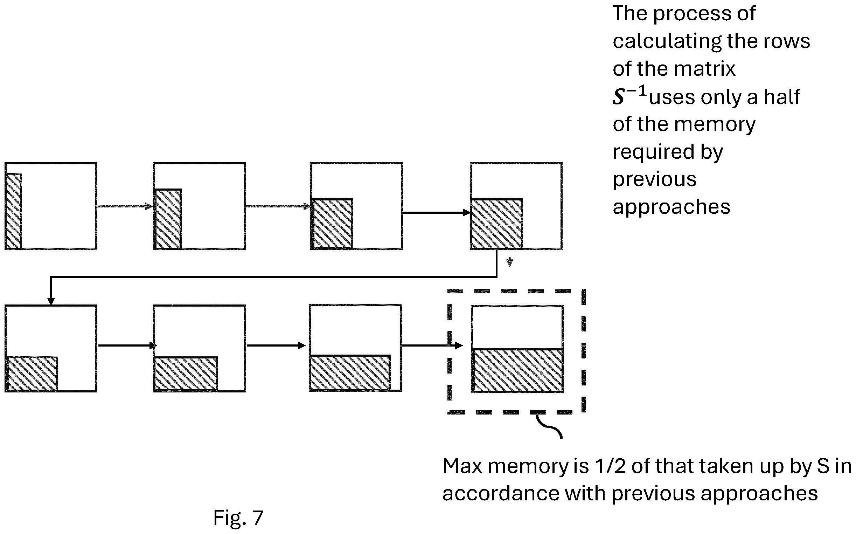

It is easily possible to adapt our approach to generate multiple of the bottom rows of the inverse at a time. To this end, we just keep more parts of the inverse intermediates in memory, i.e., the parts that are necessary to compute the targeted bottom rows. How this impacts the memory storage is depicted in an example in Figure 7, which shows an example of generating k=mt/2 rows at the time, that is half of the inverse. Figure 7 shows that at most half the memory which would be used to compute S in previous approaches is required. As k increases, the number of required regenerations of S decreases. For the case k=mt/2, only two regenerations of S are required.

If non-invertible matrices are encountered by steps S100 to S114 then the approach is compatible with the approach provided by the Classic McEliece cryptosystem which solves this issue with two different approaches, called systematic and semi-systematic. In the former, the key generation is restarted once it became clear that $H'$ is not invertible. This is repeated until a matrix is found that can be inverted, which happens on average after 3.4 tries. Our approach is straightforwardly compatible with this strategy, and we do not need to modify our approach. The difference being that we check the invertibility of $S$, rather than $H'$, however this is equivalent (if $S$ is not invertible, then neither is $H'$). The only requirement is to add exception behaviour, if the matrix *S* is not invertible. For the latter (semi-systematic), Classic McEliece actually extends the size of *S* by extra columns. If the Gaussian elimination encounters an inversion issue (i.e., there is no row with a valid 1 to swap, if there is a 0 on the diagonal), it swaps the column with one of the extra ones which would fit. In this way, the probability of encountering an *S* that is non-invertible becomes negligible. It should be noted that these extra column swaps are recorded in the variable $c_i$ of the secret key. This can be extended to also allow for the semi-systematic key generation strategy. Indeed, we adapt the same column swap behaviour once our embodiment encounters an inversion issue, store the swap in $c_i$ and continue normally.

In this following, we compare the memory and runtime complexity of the prior art approaches with the method set out above in relation to Figure 1. Note that we perform this comparison on an algorithmic level, as concrete values strongly depend on the actual implementation type. In particular, we ignore the memory and runtime requirements for other parts of the key generation that are not impacted by our method, as these are constant over all approaches.

The standard approach (denoted as Standard 1) which stores the complete matrix H requires mt $\times$ n bits of RAM. The optimized standard approach (denoted as Standard 2) based on the inverse requires to store the complete inverse - mt x mt bits. The method illustrated with reference to Figure 1 can be instantiated with varying number of rows k at each outer loop iteration. We define k as the number of rows generated by one invocation of the row calculation routine 210.

We found that the minimum peak memory is reached for k=mt/4, and that reducing k further does not improve peak memory. That is, when generating mt/4 rows of the inverse at a time, the memory used never exceeds 18kB (for the mceliece348864 parameter set). However, the row calculation routine needs to be called 4 times. Generating less than mt/4 rows at a time still results in a memory usage of 18kB. Therefore, this is the minimum peak memory, which is reached when setting k=mt/4. 18kB is not the total memory usage of the algorithm, rather the maximum usage at any one time. Therefore, for the generation of a full key, the memory usage will never exceed 18kB. We consider the k=mt/4 as the best cases to minimize memory. Furthermore, we also consider the other extreme case with k=mt/2, which trades memory for better runtime. The resulting comparison is provided in the following table. It is noticeable that our approach significantly reduces the memory requirements.

| Parameters | Standard 1 kiloBytes | Standard 2 kiloBytes | k =mt/2 kiloBytes | k=mt/4 kiloBytes |
|---|---|---|---|---|
| mceliece348864 | 335 | 74 | 37 | 18 |
| mceliece460896 | 719 | 195 | 97 | 49 |
| mceliece6688128 | 1391 | 346 | 173 | 87 |
| mceliece6960119 | 1346 | 299 | 150 | 75 |
| mceliece8192128 | 1704 | 346 | 173 | 87 |

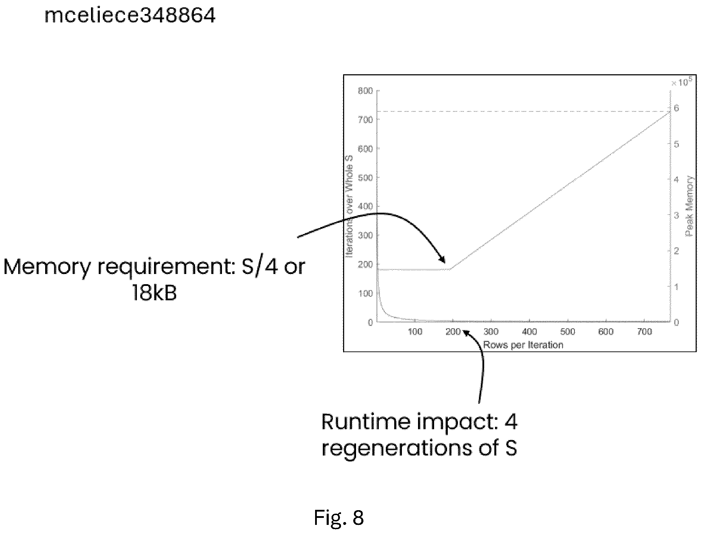

In both standard approaches, S is generated and processed only once. We consider this the baseline and compare our approach in regards to the number of re-generation / processing of S. This number depends on the number of rows generated in each iteration of the outer loop (steps S110 to S114), which also has an impact on the peak memory requirements. In particular, we require ceil(mt/k) re-generation / processing of S, where ceil () denotes the ceiling function. This would result in 4 regenerations for k=mt/4 and 2 regenerations for k=mt/2. This relation is depicted in Figure 8. It is noticeable that reducing memory below (mt*mt) / 4 is not possible, and that further reduction of k results in a significant increase in the runtime. In the best case, we reduce memory by a factor of 4 and trade runtime with an equal factor.

We report the memory complexity in terms of the size of the intermediates stored in the matrix *T*. In addition, the vectors $S'_c$ and *D* need to be stored as well. For simplicity, these are not considered in the table above since the additional memory requirement for these two vectors is small (1kB to 2.5kB dependent on parameter set).

The most straightforward implementation of our approach is as a SW program, that implement the aforementioned steps. This can be implemented on off the shelf devices. The peak memory usage is significantly reduced which extends the range of devices which can be used for practical deployment.

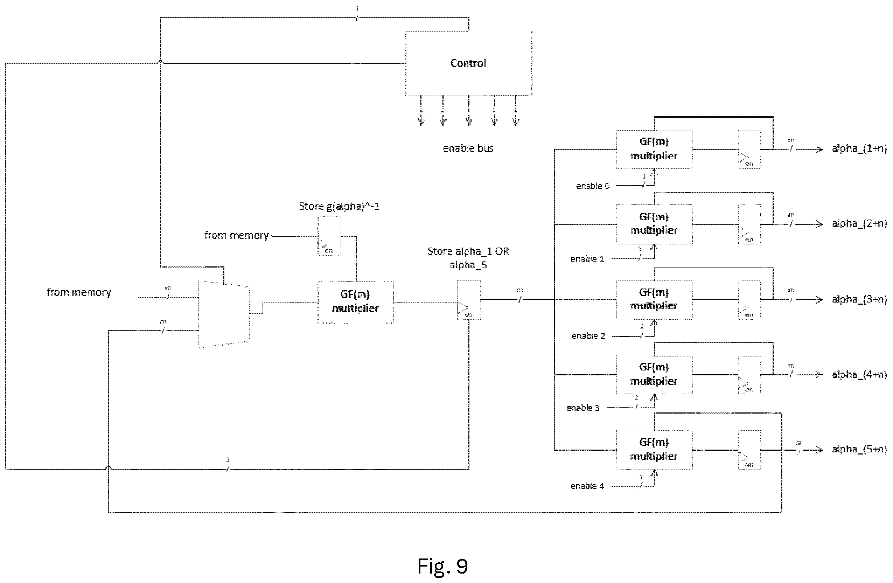

Some runtime overhead may be introduced. To offset this part, it is possible to instantiate our processing resource 200 in a hardware/software co-design as shown in Figure 9, where the computationally expensive step of re-generating *S* is implemented as a dedicated hardware block.

Regenerating *S* involves generating the *mt* leftmost columns of *H'*, where each m bits of a column are of the form:

$$\frac{\alpha_j^{i-1}}{g(\alpha_j)}$$

where $j$ is the column number and $i$ is the row number and $g$ is a monic, irreducible polynomial in $F_q[x]$.

There are three operations involved: evaluating the polynomial $g$ at a certain $\alpha$, inverting the result and applying a field multiplication. The first two operations are carried out once per column. Therefore, the values of $1/g(\alpha_j)$ can be computed once, stored and then reused across all regenerations with a memory overhead of $m \times mt$. However, the field multiplication must be carried out for each regeneration. Figure 9 shows an example hardware set-up for achieving this.

In the example, 6 field multipliers are used. An estimate for the gate count of a GF(12) multiplier is 500 gates. Overall the system is expected to have estimated gate count of 5 kGates or less. With this system one generation of S is expected to take < 20k Cycles discounting any IO delays. Considering the worst case, where S needs to be regenerated $mt$ times, the result is ~15 MCycles. With a system clocked at a low frequency of 100MHz, the process of regeneration of S $mt$ times would take less than one second. This would make the overhead of regenerations negligible if connected to a software implemented system.

In summary, the embodiment above describes a new solution for generating the public key in chunks during the Key Generation operation, with significantly lower peak RAM usage than if generated by the aforementioned standard methods. This would allow the Classic McEliece cryptosystem to be implementable on constrained embedded devices.

It should be noted that the above-mentioned aspects and embodiments illustrate rather than limit the disclosure, and that those skilled in the art will be capable of designing many alternative embodiments without departing from the scope of the disclosure as defined by the appended claims. In the claims, any reference signs placed in parentheses shall not be construed as limiting the claims. The word "comprising" and "comprises", and the like, does not exclude the presence of elements or steps other than those listed in any claim or the specification as a whole. In the present specification, "comprises" means "includes or consists of" and "comprising" means "including or consisting of". The singular reference of an element does not exclude the plural reference of such elements and vice-versa. The disclosure may be implemented by means of hardware comprising several distinct elements, and by means of a suitably programmed computer. In a device claim enumerating several means, several of these means may be embodied by one and the same item of hardware. The mere fact that certain measures are recited in mutually different dependent claims does not indicate that a combination of these measures cannot be used to advantage.

**Claims**

1. A computer-implemented method of generating a public key, wherein the public key comprises a matrix wherein the number of rows and columns of the matrix are associated with a security requirement, wherein the method is implemented by a processing resource, the method comprising:

   receiving a request for a public key;
   responsive to receiving the request, generating a first key generation matrix;
   generating a second key generation matrix based on the first key generation matrix;
   generating part of an inverse of the second key generation matrix, wherein part of the inverse of the second key generation matrix is not equal to the full inverse of the second key generation matrix;
   generating a part of the public key based on the part of the second key generation matrix.

2. A method according to Claim 2, wherein the inverse of the second key generation matrix is not stored in full, wherein only the part of the inverse of the second key generation matrix is stored.

3. A method according to Claim 1 or Claim 2, wherein the generation of the part of the inverse of the second key generation matrix is repeated until all of the parts of the second key generation matrix have been used to generate a corresponding part of the public key.

4. A method according to any one of Claims 1 to 3, wherein the part of the inverse of the second key generation matrix is a row of the inverse of the second key generation matrix and the part of the public key based on the part of the second key generation matrix is a row of the public key.

5. A method according to any one of Claims 1 to 3 wherein the part of the inverse of the second key generation matrix is a plurality of rows of the inverse of the second key generation matrix and the part of the public key based on the part of the second key generation matrix is a plurality of rows of the public key.

6. A method according to any preceding claim, wherein the first key generation matrix is generated ad hoc, without interrupting the method.

7. A method according to any preceding claim, wherein the first key generation matrix is generated based on a random or pseudo-random seed.

8. A method according to any preceding claim, wherein the part of the public key is generated based on a product of a part of the inverse of the second key generation matrix and the first key generation matrix.

9. A method according to any preceding claim, wherein the processing resource is an embedded computing device.

10. A method according to Claim 9, wherein the request for the public key is received from any computing device which can communicate, directly or indirect connection with the embedded computing device..

11. A method according to any preceding claim, wherein the second key generation matrix is a square matrix equal to the elements in the first mt rows and first mt columns of the first key generation matrix.

12. A method according to any preceding claim, wherein generating part of an inverse of the second key generation matrix comprises (wherein all elements of S and T are in

$$F_2^{\square}$$

and wherein all elements of D are integers) one or more of the following steps:

a) Initialising a permutation vector D of *mt* elements to the integers 0, 1, 2 ... *mt-1*

b) Initialising the matrix $T \in F_2^{mt \times mt}$ to the identity matrix;
c) Loop 1: iteratively, for *c=0* up to *mt-1*:

d) Generating the elements c to *mt-1* of column c of the second key generation matrix S $\in F_2^{mt \times mt}$ and storing them as elements c to *mt-1* of the vector $S_c \in F_2^{mt}$
e) Setting the elements 0 to *c*-1 of the vector $S_c$ to 0;
f) Applying the permutation stored in *D* to the elements of $S_c$

g) Multiplying $TS_c = S_c'$.
h) If element c of $S'_c \neq 1$
i) Finding the next element *j* in $S'_c$ which is 1
j) Swapping element *c* and element *j* of $S'_c$
k) Swapping element c and element *j* of *D*
l) Swapping row *c* and row *j* of *T*
m) Swapping column *c* and column *j* of *T*
End if
n) Loop 2: For *d = c+1* up to *mt-1*
o) If element *d* of $S'_c$ == *1*
p) Computing the bitwise XOR of row d of T and row c of T and storing the result in row *d* of *T*
End if
End loop 2
q) Discarding row *c* of *T*
End loop 1
r) Inverting the permutation vector *D* as $D^{-1}$
s) Applying the inverted permutation $D^{-1}$ to columns of *T*

13. A non-transitory computer readable storage medium having stored thereon executable instructions that, as a result of being executed by a processor of a computer system, cause the computer system to at least perform the method of any one of claims 1 to 12.

14. A system configured to implement the method of Claims 1 to 12.

15. A processing resource comprising a processor and memory including executable instructions that, as a result of execution by the processor, causes the reader to perform the method of Claims 1 to 12.

S112 – last row of $T$ is calculated based on row calculation routine output

S114 – row $r$ of $T_{mt-1}$ $H' = H_r$ calculated. $PubK_r$ is equal to elements $mt$ to $n$-1 of $H_r$.

S106 – counter $r$ initialised to zero

S108 – matrix ($S \in F_2^{mt \times mt}$) implicitly initialised.

S110 – column $r$ swapped with column $mt$-1

S100 – a request is received for generation of public key

S102 – request provided to key generation module.

S104 – random seed of matrix $H'$ is generated and matrix $H'$ is provided as an implicit input.

Fig. 1

200 – processing resource

202 – key generation resource

210 – row calculation routine

Request for a key

Row of public key is generated

Fig. 2

EP 4 738 760 A1

S300 – matrix **S** is provided as an implicit input

S302 – initialise the permutation vector

S304 – initialise **T** to the identity matrix

S306 – generates elements $c$ to $mt$-$1$ of column $c$ of matrix **S** as vector $S_c$

S308 – row calculation routine then sets the elements 0 to $c$-1 of the vector $S_c$ to 0

S310 – permutation D applied to elements of $S_{c'}$

S312 – calculation of $TS_c = S'_c$ determined.

S314 – Gaussian Elimination on $S'_c$ and **T**.

S316 – row $c$ of **T** discarded.

S318 – permutation inverted.

S320 – row calculation routine applies inverted permutation to columns of **T**.

Fig. 3

15

Max memory ¼ of that taken up by S in accordance with previous approaches

The process of calculating the rows of the matrix $S^{-1}$ uses only a quarter of the memory required by previous approaches

Fig. 4

EP 4 738 760 A1

Fig. 5

$S^{-1}$

```
10100100
10000100
10100000
01100100
10101000
10110000
10100110
01100101
```

$S^{-1}$

```
10100100
01100101
10100000
01100100
10101000
10110000
10100110
10000100
```

$S$

```
11101100
01110001
11100110
00101100
00100111
10100010
10000101
00001111
```

$S$

```
10101101
01110001
10000111
00101100
01100110
10100010
10001010
01011110
```

Fig. 6

The process of calculating the rows of the matrix $S^{-1}$ uses only a half of the memory required by previous approaches

Max memory is 1/2 of that taken up by S in accordance with previous approaches

Fig. 7

mceliece348864

Memory requirement: S/4 or
18kB

Runtime impact: 4
regenerations of S

Fig. 8

Fig. 9

Europäisches
Patentamt

European
Patent Office

Office européen
des brevets

# EUROPEAN SEARCH REPORT

**Application Number**

EP 24 21 0675

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ROTH JOHANNES ET AL: "Classic McEliece Implementation with Low Memory Footprint", 29 January 2021 (2021-01-29), SPRINGER, PAGE(S) 34 - 49, XP047575842, * abstract * * Sections 3.1 and 3.2. * ----- | 1-15 | INV. H04L9/08 |
| X | US 2023/048825 A1 (URIAN RAINER [DE]) 16 February 2023 (2023-02-16) * abstract; figure 3 * * paragraphs [0004], [0116] - [0123] * ----- | 1-15 | |

**TECHNICAL FIELDS SEARCHED (IPC)**

H04L

The present search report has been drawn up for all claims

| Place of search | Date of completion of the search | Examiner |
|---|---|---|
| Munich | 16 April 2025 | Wolters, Robert |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons
..................................................................................
& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 24 21 0675

This annex lists the patent family members relating to the patent documents cited in the above-mentioned European search report.
The members are as contained in the European Patent Office EDP file on
The European Patent Office is in no way liable for these particulars which are merely given for the purpose of information.

16-04-2025

| Patent document cited in search report | Publication date | Patent family member(s) | Publication date |
|---|---|---|---|
| US 2023048825 A1 | 16-02-2023 | DE 102021118435 A1<br>US 2023048825 A1 | 19-01-2023<br>16-02-2023 |

EPO FORM P0459

For more details about this annex : see Official Journal of the European Patent Office, No. 12/82